# EUROPÄISCHE PATENTSCHRIFT

(11) **EP 1 288 527 B1**
(45) Veröffentlichungstag und Bekanntmachung des Hinweises auf die Patenterteilung: **08.02.2006**
(21) Anmeldenummer: 02018252.3
(22) Anmeldetag: 22.08.2002
(51) Int. Cl.: F16F 15/14, F16F 15/12, F16F 15/173

(54) **Kombinierter Axial- und Drehschwingungsdämpfer**
Combined axial- and torsional-vibration damper
Amortisseur combiné de vibrations axiales et torsionelles

(30) Priorität: 24.08.2001 DE 10140679
(43) Veröffentlichungstag der Anmeldung: 05.03.2003
(73) Patentinhaber: Hasse & Wrede GmbH, 12347 Berlin (DE)
(72) Erfinder: Janner, Lutz, 12107 Berlin (DE)
(74) Vertreter: Mattusch, Gundula

(56) Entgegenhaltungen:
- DE-C- 727 538
- DE-C- 970 876
- US-A- 2 585 382
- US-A- 2 939 338
- US-A- 3 986 411

## Beschreibung

Die Erfindung betrifft einen kombinierten Axial- und Drehschwingungsdämpfer.

Schwingungsdämpfer, die über eine Nabe an einer Maschinenwelle, insbesondere einer Motorkurbelwelle befestigt werden können, sind in verschiedenen Ausführungsformen bekannt.

Es gibt sogenannte Drehschwingungsdämpfer, Axialschwingungsdämpfer und kombinierte Axial- und Drehschwingungsdämpfer.

Ein Drehschwingungsdämpfer mit einem Gehäuse, das drehsteif über eine Nabe an einer Maschinenwelle, insbesondere einer Motorkurbelwelle, befestigt werden kann, ist beispielsweise in der EP 0 745 784 B 1 offenbart.

Viskositäts-Drehschwingungsdämpfer sind seit langem in den verschiedensten Ausführungsformen bekannt. Der Viskositäts-Drehschwingungsdämpfer ist ein Maschinenelement, welches vorzugsweise am freien Kurbelwellenende von Verbrennungskraftmaschinen zum Zwecke der Begrenzung der genannten Torsionsschwingungen bzw. -beanspruchungen angebracht wird. Typische bekannte Viskositäts-Drehschwingungsdämpfer sind beispielsweise beschrieben in der EP 0 745 784 B1, WO 96/27 748 und DE 198 55 420 A1. Es sind auch schon Mineralöl-Drehschwingungsdämpfer eingesetzt worden, man vergleiche EP 0 655 112 B1.

Neben den genannten Torsionsschwingungen treten nun häufig auch axiale Schwingbewegungen an Kurbelwellen auf. Zur Reduzierung derartiger Schwingungsformen werden heutzutage bei Bedarf Axialschwingungsdämpfer eingesetzt. So wird beispielsweise bei den aus der EP 0 219 341 B1 und EP 0 220 871 A2 bekannten Bauformen eines derartigen Axialschwingungsdämpfers eine Elastomerfeder zur Anwendung gebracht, die in axialer Richtung gleichzeitig eine Steifigkeit besitzt und Dämpfung erzeugt. Dämpfer dieser Bauform werden vorzugsweise bei kleineren bis mittelgroßen Motoren eingesetzt.

Bei einer weiteren bekannten Bauform wird die axiale Schwingbewegung der Kurbelwelle gegen den Motorblock hydraulisch abgestützt. Entsprechend der oszillierenden Axialbewegung der Kurbelwelle wird ein hydraulischer Kolben in einem Zylinder verschoben. Dieser Kolben ist fester Bestandteil der Kurbelwelle, während der Zylinder mit dem Motorblock gekoppelt ist. Bei jeder axialen Relativbewegung des Kolbens in diesem Zylinder wird Öl durch eine Düse gepresst, wodurch die Axialschwingung gedämpft wird. Dämpfer dieser Bauform sind an großen 2-Takt-Diesel-Motoren zu finden.

Es sind auch kombinierte Axial- und Drehschwingungsdämpfer bekannt, beispielsweise aus der US-29 39 338, welche als nächstliegender Stand der Technik angesehen wird.

Bei den immer größer werdenden Motoren und insbesondere bei den PKW-Dieselmotoren besteht nun ein Bedürfnis, sowohl die Axialschwingungen als auch die Torsionsschwingungen dämpfen zu können.

Aufgabe der vorliegenden Erfindung ist es daher, einen Dämpfer bereit zu stellen, der sowohl Torsionsschwingungen bzw. Drehschwingungen als auch Axialschwingungen dämpfen kann und möglichst wenig Raum einnimmt.

Gelöst wird diese Aufgabe durch einen kombinierten Axial- und Drehschwingungsdämpfer mit den Merkmalen des Anspruchs 1. Weitere vorteilhafte Ausführungsformen der Erfindung ergeben sich durch die Merkmale der Ansprüche 2 bis 11.

Der erfindungsgemäße Axial- und Drehschwingungsdämpfer kombiniert einen Axial- mit einem per se bekannten Drehschwingungsdämpfer. Dieser kann in Form eines Viskositäts-Drehschwingungsdämpfers oder eines Mineralöl-Drehschwingungsdämpfers ausgeführt werden. Ebenso ist eine Variante möglich, bei welchem die Drehschwingungen durch einen Gummitilger gedämpft werden.

Der kombinierte Axial- und Drehschwingungsdämpfer ist drehsteif über eine Nabe an einer Maschinenwelle, insbesondere einer Motorkurbelwelle, zu befestigen. Dabei bildet die Nabe die Primärmasse des Axialschwingungsdämpfers und der gesamte Drehschwingungsdämpfer stellt die Sekundärmasse des Axialschwingungsdämpfers dar. Der Drehschwingungsdämpfer ist mit der Nabe drehwechselfest sowie derart ausgestaltet und verbunden, dass oszillierende Axialschwingungen des gesamten Drehschwingungsdämpfers möglich sind und eine federnde Rückstellung erfolgt. Im Axialschwingungsdämpfer ist ein Spaltraum vorhanden, der mit einem viskosen Dämpfungsmedium gefüllt ist, das bei Auftreten dieser Axialschwingungen auf Scherung beansprucht wird, und der nach außen fluiddicht abgedichtet ist.

Obwohl der erfindungsgemäße Dämpfer für alle Arten von Maschinenwellen eingesetzt werden kann, wird nachstehend primär auf Kurbelwellen Bezug genommen, die stellvertretend für die genannten Maschinenwellen stehen. Kurbelwellen bilden mit ihren Massen und Steifigkeiten schwingungsfähige Systeme. Die in der Kurbelwelle auftretenden Torsionsschwingungen können durch Drehschwingungsdämpfer reduziert werden.

Der Dämpfer weist einen Drehschwingungsdämpfer per se bekannter Bauart auf. Dabei kann es sich um einen aus dem Stand der Technik bekannten Mineralöl-Drehschwingungsdämpfer oder um einen Viskositäts-Drehschwingungsdämpfer handeln. Vorzugsweise ist der Drehschwingungsdämpfer als Viskositäts-Drehschwingungsdämpfer ausgeführt. In dessen Gehäuse ist ein Schwungring derart geführt ist, dass Scherspalte, in denen sich ein viskoses Dämpfungsmedium befindet, zwischen dem Gehäuse und dem Schwungring aufrechterhalten werden. Eine axial besonders kompakte Bauweise ergibt sich, wenn der Schwungring die Nabe konzentrisch umschließt.

Der gesamte Drehschwingungsdämpfer stellt die Sekundärmasse des Axialschwingungsdämpfers dar. Die Primärmasse des Axialschwingungsdämpfers wird durch die drehsteif an der Maschinenwelle befestigte Nabe gebildet. Mit anderen Worten, der gesamte Drehschwingungsdämpfer wird als Sekundärmasse des Axialschwingungsdämpfers herangezogen. Der gesamte Drehschwingungsdämpfer ist über dessen Gehäuse mit der Nabe drehwechselfest verbunden, um eine drehsteife Übertragung der Wechselmomente auf den Drehschwingungsdämpfer sicherzustellen.

Zudem ist der Drehschwingungsdämpfer derart ausgestaltet und verbunden, dass oszillierende Axialschwingungen des gesamten Drehschwingungsdämpfers möglich sind und eine federnde Rückstellung erfolgt. Bedingt dadurch, dass der Drehschwingungsdämpfer mit seinem Gehäuse bezüglich der Nabe in Axialrichtung eine oszillierende axiale Schwingbewegung ausführen kann, wird der axiale Schwingweg des Axialschwingungsdämpfers bereitgestellt.

Um eine viskosgedämpfte Ankopplung des Axialschwingungsdämpfers an den Drehschwingungsdämpfer zu erreichen, ist zwischen Gehäuse und Nabe des Drehschwingungsdämpfers ein Spaltraum vorhanden, der mit einem viskosen Dämpfungsmedium gefüllt ist, das bei Auftreten der geschilderten Axialschwingungen auf Scherung beansprucht wird, wodurch Schwingungsenergie dissipiert wird. Dieser Spattraum ist nach außen fluiddicht abgedichtet, um ein Auslaufen des viskosen Dämpfungsmediums zu gewährleisten.

Bei dem erfindungsgemäßen Drehschwingungsdämpfer weist das Gehäuse vorzugsweise eine radial innen liegende Zylinderfläche auf. Dieser Zylinderfläche, die man auch als radial innenliegende Mantelfläche des Drehschwingungsdämpfers bezeichnen kann, liegt einer weiteren Zylinderfläche gegenüber, welche radial außen, an der Nabe ausgebildet ist. Man kann auch sagen, dass die radial äußere Mantelfläche der Nabe diese weitere Zylinderfläche bildet.

Die beiden Zylinderflächen sind nun derart angeordnet, beabstandet und dimensioniert, dass sie einander umfassen und zwischen sich den scherenden Spaltraum definieren, der auch als Ringraum bezeichnet werden kann und mit einem viskosen Dämpfungsmedium gefüllt ist. Bei diesem Dämpfungsmedium kann es sich um ein bekanntes und auch schon bereits früher eingesetztes Dämpfungsmedium handeln, beispielsweise auf Silikonbasis.

Die Nabe ist somit in den Raum eingesetzt, welche von der radial innenliegenden Zylinderfläche umgrenzt wird. Auch ein üblicher, isoliert eingesetzter bekannter Drehschwingungsdämpfer ist normalerweise mit einer Nabe an der Welle befestigt. Bei dem erfindungsgemäßen kombinierten Dämpfer befindet sich nun im Bereich dieser Nabe zusätzlich ein Axialschwingungsdämpfer. Mit anderen Worten, in dem axialen Bauraum, welcher von dem per se bekannten Drehschwingungsdämpfer eingenommen wird, wird zusätzlich ein Axialschwingungsdämpfer eingebaut. Es wird somit eine Kombination bereitgestellt, die nicht mehr Raum beansprucht als bereits bekannte Drehschwingungsdämpfer.
In einer weiteren Ausführungsform erfolgt nun die federnde Rückstellung durch eine zwischen Gehäuse und Nabe wirkende elastische Feder, vorzugsweise einer Membranfedem.

Die Membranfedem sind koaxial zur Dämpferachse, die im Betriebsfall mit der Maschinenachse der Maschinenwelle zusammenfällt, angeordnet. Deren Scheibenebene liegen in der Radialebene des Drehschwingungsdämpfers. Derartige Membranfedem befinden sich vorzugsweise in Axialrichtung sowohl vor dem Spaltraum als auch nach dem Spaltraum. Diese Membranfedem sind einerseits mit der Nabe verbunden und erstrecken sich über diese radial hinaus und sind zudem auch mit dem Drehschwingungsdämpfer verbunden. Dadurch verbinden sie die Nabe drehstarr mit dem Gehäuse des Drehschwingungsdämpfers. Zudem dichten sie vorzugsweise den Spaltraum nach außen fluiddicht ab.

Da die Scheibenebene dieser dünnwandigen Membranfedern in der Radialebene liegt, verwölben sie sich unter der Wirkung von wechselnden Längskräften, so dass sich der Drehschwingungsdämpfer axial bezüglich der Nabe verschieben kann. Ferner tragen sie für eine federnde Rückstellung des Drehschwingungsdämpfers Sorge. Als Radialebene wird im Rahmen der vorliegenden Unterlagen im übrigen diejenige Ebene bezeichnet, die senkrecht zur Achse der Welle verläuft und von dieser senkrecht geschnitten wird.

Nach einer bevorzugten Ausführungsform sind axial beidseitig von dem Spaltraum mehrere, im wesentlichen gleiche Membranfedem in Axialrichtung übereinanderliegend angeordnet und zu jeweils einem gestapelten Paket zusammengefasst.

Weiterhin bevorzugt sind die Membranfedem an ihrem radial äußeren Rand an dem Drehschwingungsdämpfer und an ihrem radial innerem Rand an der Nabe befestigt. Um eine derartige Befestigung sicherzustellen, ist an der Nabe an beiden Stirnseiten eine Ringfläche ausgebildet, deren Ebene in der Radialebene liegt.

Auch an dem Gehäuse ist an beiden Stimseiten eine Ringfläche ausgebildet, deren Ebene ebenfalls in der Radialebene liegt. Gegen diese Ringflächen werden die Membranfedem von axial außen mit ihrem radial äußeren Rand bzw. ihrem radial inneren Rand gepresst und verbinden den Drehschwingungsdämpfer drehstabil bzw. drehstarr mit der Nabe. Dieses Anpressen geschieht mit Hilfe von Befestigungsmitteln.

Bei diesen Befestigungsmitteln handelt es sich vorzugsweise um Schrauben, die sich von axial außen in Axialrichtung durch passende Bohrungen in den Rändern der Membranfedem in den Drehschwingungsdämpfer bzw. die Nabe erstrecken und dort in Gewindebohrungen eingreifen. Diese Schrauben sind dabei vorzugsweise gleichmäßig über den Umfang verteilt und bilden eine Art Kranz. -

Die Ringflächen des Drehschwingungsdämpfers liegen vorzugsweise radial innen in der Nähe des Spaltraumes, während die Ringflächen der Nabe von dem Spaltraum nach radial innen versetzt angeordnet sind. Die Nabe erstreckt sich zwischen den Ringflächen und somit auch den Membranfedern nach radial außen, so dass sich der Spaltraum möglichst weit radial außen befindet.

Bei einer axialen Relativbewegung des Drehschwingungsdämpfers bezüglich der Nabe werden die Membranfedem um einen gewissen Betrag aus der Radialebene ausgelenkt bzw. verwölbt. Dazu muss der zwischen den Membranfedem angeordnete Bereich der Nabe axial etwas davon beabstandet sein, damit die Membranfedem axial aus der Radialebene ausgelenkt werden können. Dabei können sich die axialen Stirnflächen dieser Membranfedem aneinander reiben. Um dies zu verhindern, ist vorzugsweise zwischen zwei benachbarten Membranfedem und auch zwischen den Membranfedem und den gegenüberliegenden Ringflächen, gegen welche die Membranfedem gepresst werden, jeweils eine Abstandsringscheibe eingelegt. Mit anderen Worten, pro Ebene befinden sich zwischen den Membranfedem zwei Ringe mit unterschiedlichem Radius.

Der Radius der kleineren Abstands-Ringscheibe entspricht in etwa dem Radius der Membranfedern an ihrem radialen inneren Rand, während der Radius der größeren Abstands-Ringscheibe in etwa dem Radius der Membranfedern an ihrem radialen äußeren Rand entspricht.

Durch diese Abstands-Ringscheiben werden die Membranfedem voneinander beabstandet gehalten, so dass die Reibungskräfte verringert werden und sich die Membranfedem reibungsfrei verformen können.

Außer den Membranfedem oder den Paketen von Membranfedem, die hier für die Führung und federnde Rückstellung des Drehschwingungsdämpfer verantwortlich sind und vorzugsweise auch die Funktion der Abdichtung erfüllen, sind ferner konstruktive Lösungen mit anderen Maschinenelementen möglich. So kann der Drehschwingungsdämpfer beispielsweise durch eine Wellenverbindung mit Vielkeil-, Zahnwellen-, Kerbzahn- oder Polygonprofil torsionsteif geführt werden, den gewünschten axialen Schwingweg zulassen und zugleich einen Spaltraum bzw. Scherspalt bereit halten.

Zur fedemden Rückstellung des Drehschwingungsdämpfer können zudem Schrauben- oder Tellerfedern oder auch andere Einrichtungen dienen. Auch eine eigenständige Abdichtung des fluidgefüllten Spaltraumes bzw. Scherspalts im Axialdämpfer ist möglich.

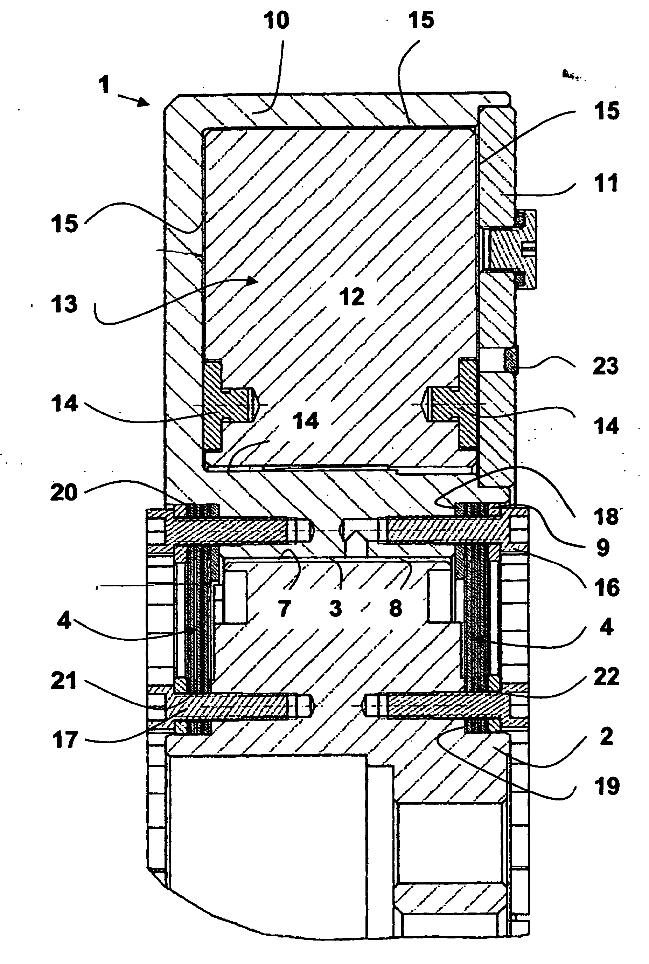

Die Erfindung wird im folgenden anhand der Zeichnung näher erläutert, welche eine bevorzugte Ausführungsform darstellt, bei der der Drehschwingungsdämpfer ein Viskositäts-Drehschwingungsdämpfer ist.

In der beiliegenden Figur ist dabei ein Schnitt in Axialrichtung durch einen erfindungsgemäßen Dämpfer gezeigt. Der Drehschwingungsdämpfer des erfindungsgemäßen kombinierten Axial- und Drehschwingungsdämpfers ist als bekannter Viskositäts-Dämpfer ausgebildet, man vergleiche auch DE 198 55 420 A1. Statt dieses bekannten Dämpfers kann auch ein Mineralöl-Verdrängungsdämpfer, beispielsweise gemäß DE 195 34 818.4, Anwendung finden.

Der in der Figur gezeigte Viskositäts-Dämpfer 1 besitzt ein Ringgehäuse 10 mit in etwa quaderförmigem Querschnitt, das zu einer Axialseite bzw. Stirnseite hin von einem Deckel 11, bei dem es sich um eine Ringscheibe handelt, verschlossen wird. In dem Ring-Innenraum 13 befindet sich ein Schwungring 12, der durch Lagereinrichtungen 14 aus Kunststoff geführt ist.

Zwischen dem Schwungring 12 und den umgrenzenden Innenmantelflächen des Ringgehäuses 10 und des Deckels 11 befinden sich Scherspalte 15, die von einem viskosen Dämpfungsmedium gefüllt sind, das über eine Bohrung 23 im Deckel 11 eingefüllt werden kann.

Die radial innen liegende Mantelfläche stellt eine Zylinderfläche 8 dar, welche die radial innenliegende und zentrale Nabe 2 umgibt. Die innerhalb des Schwungring 12 angeordnete Nabe 2 kann auf übliche Art mit einer Welle und insbesondere einer Motorkurbelwelle an deren Kraftgegenseite verbunden werden. Die Nabe 2 besitzt radial außen ebenfalls eine Zylinderfläche 7, die auch als Außenmantelfläche bezeichnet werden kann. Die Zylinderfläche 8 umgibt die Zylinderfläche 7, wodurch der kreisringförmige Spaltraum 3 entsteht, der mit einem nicht gezeigten viskosen Dämpfungsmedium gefüllt ist.

Die drehsteife Verbindung zwischen Drehschwingungsdämpfer 1 und Nabe 2 erfolgt mit Hilfe von Membranfedem 4. Dabei sind mehrere gleich ausgebildete Membranfedem 4 übereinandergelegt und zu Paketen zusammengefasst. Diese Membranfedern, die man auch als Ringscheibenfederelemente bezeichnen könnte, befinden sich axial vor und auch axial nach dem Spaltraum 3 und verschließen diesen in beide Axialrichtungen.

Die Membranfedem 4 sind an ihrem radial äußeren Rand 9 und auch an ihrem radial innerem Rand 22 mit Hilfe von Schrauben 16 bzw. 17 mit dem Drehschwingungsdämpfer 1 bzw. der Nabe 2 verbunden. An ihrem radial äußeren Rand 9 liegen sie dabei auf jeweils einer an dem Drehschwingungsdämpfer 1 ausgebildeten Ringfläche 18 auf. An ihrem radial inneren Rand 22 liegen sich auf jeweils einer an der Nabe 2 ausgebildeten Ringfläche 19 auf. Die Ringflächen 18, 19 könnte man auch als Flanschflächen bezeichnen. Die Membranfedem 4 werden dabei mit Hilfe der Schrauben 16 und 17, welche in damit korrespondierende Gewindebohrungen im Drehschwingungsdämpfer 1 und in der Nabe 2 eingreifen, gegen die genannten Ringflächen 18 bzw. 19 gepresst.

Zwischen zwei benachbarten Membranfedem sind an ihrem radialen äußeren Rand 9 und an ihrem radial inneren Rand 22 jeweils eine Abstands-Ringscheibe 20 bzw. 21 eingelegt. Diese Maßnahmen dienen unter anderem zur Vermeidung von Reibkorrosion. Eine entsprechender Anschlagring 24 ist auch zwischen die Ringflächen 18 und 19 und der gegenüberliegenden Membranfeder 4 sowie zwischen den Köpfen der Schrauben 16,17 und der diesen Köpfen gegenüberliegenden Membranfedem 4 eingelegt. Die beiden Anschlagringe 24 werden von den beiden Schraubenkreisen 16 mitgespannt und begrenzen die axialen Schwingungsausschläge, indem sie sich an Vorsprünge der Nabe 2 anlegen. Sie schützen somit die Membranfedem 4 vor Überlastung.

In der Nabe 2 sind zwei ein Vorratsräume 5 ausgebildet, die mit dem Spaltraum 3 in Verbindung steht. Der Spaltraum 3 steht im übrigen über eine Verbindungskanal 6 mit den Scherspalten 15 des Drehschwingungsdämpfers in Verbindung.

Beim Auftreten von Axialschwingungen oszilliert der Drehschwingungsdämpfer 1 in Axialrichtung bezüglich der Nabe 2 mit geringen Amplituden. Dabei wird das in den Spaltraum 3 befindliche viskose Dämpfungsmedium einer Scherwirkung unterworfen, wodurch eine Schwingungsdämpfung erfolgt. Gleichzeitig ist der Drehschwingungsdämpfer 9 jedoch drehstarr mit der Nabe 2 verbunden. Auftretende Torsionsschwingungen werden durch den Drehschwingungsdämpfer gedämpft.

Der erfindungsgemäße kombinierte Axial- und Drehschwingungsdämpfer ist somit in der Lage, sowohl Drehschwingungen als auch Axialschwingungen wirksam zu dämpfen. Zudem ist seine axiale Baulänge nicht größer ist als die Baulänge des zugehörigen Drehschwingungsdämpfers.

### Bezugszeichenliste

- 1: Viskositäts-Drehschwingungsdämpfer
- 2: Nabe
- 3: Spaltraum
- 4: Membranfeder
- 5: Vorratsraum
- 6: Verbindungsleitung
- 7: Zylinderfläche der Nabe
- 8: Zylinderfläche des Drehschwingungsdämpfers
- 9: radial äußerer Rand
- 10: Ringgehäuse
- 11: Deckel
- 12: Schwungring
- 13: Ring-Innenraum
- 14: Lagereinrichtung
- 15: Scherspalte
- 16: äußere Schrauben
- 17: innere Schrauben
- 18: Ringfläche des Drehschwingungsdämpfers
- 19: Ringfläche der Nabe
- 20: äußere Abstands-Ringscheibe
- 21: innere Abstands-Ringscheibe
- 22: radial innerer Rand
- 23: Bohrung
- 24: Anschlagring

## Patentansprüche

1. Kombinierter Axial- und Drehschwingungsdämpfer mit einem Gehäuse (10), das drehsteif über eine Nabe (2) an einer Maschinenwelle, insbesondere einer Motorkurbelwelle befestigt werden kann, wobei das Gehäuse (10) mit der Nabe (2) drehfest sowie derart ausgestaltet und verbunden ist, dass oszillierende Axialschwingungen zwischen Gehäuse (10) und Nabe (2) möglich sind und federnde Rückstellung erfolgt und zwischen Gehäuse (10) und Nabe (2) ein Spaltraum (3) vorhanden ist, der mit einem viskosen Dämpfungsmedium gefüllt ist, das bei Auftreten von Axialschwingungen auf Scherung beansprucht wird, wobei der Spaltraum (3) nach außen fluiddicht abgedichtet ist und der Drehschwingungsdämpfer als Mineratol-Drehschwingungsdämpfer oder als Viskositäts-Drehschwingungsdämpfer ausgeführt ist, in dessen Gehäuse (10) ein Schwungring (12) derart geführt ist, dass Scherspalte (15), in denen sich ein viskoses Dämpfungsmedium befindet, zwischen dem Gehäuse (10) und dem Schwungring (12) aufrecht erhalten werden.

2. Axial- und Drehschwingungsdämpfer nach Anspruch 1, **dadurch gekennzeichnet, dass** der Spaltraum (3) zwischen Gehäuse (10) und Nabe (2) mit den Scherspalten (15) in Verbindung steht.

3. Axial- und Drehschwingungsdämpfer nach Anspruch 1 oder 2, **dadurch gekennzeichnet, dass** der Schwungring (12) die Nabe (2) konzentrisch umschließt.

4. Axial- und Drehschwingungsdämpfer nach einem der vorhergehenden Ansprüche, **dadurch gekennzeichnet, dass** das Gehäuse (10) eine radial innenliegende Zylinderfläche (8) und die Nabe (2) eine radial außenliegende Zylinderfläche (7) derart besitzen, dass die beiden Zylinderflächen (7, 8) einander gegenüberliegen und zwischen sich den Spaltraum (3) definieren.

5. Axial- und Drehschwingungsdämpfer nach einem der vorhergehenden Ansprüche, **dadurch gekennzeichnet, dass** die federnde Rückstellung durch eine zwischen Gehäuse (10) und Nabe (2) wirkende elastische Feder erfolgt.

6. Axial- und Drehschwingungsdämpfer nach einem der vorhergehenden Ansprüche, **dadurch gekennzeichnet, dass** in zwei axial beabstandeten, sich radial erstreckenden Ebenen mindestens eine zur Dämpferachse konzentrisch angeordnete Membranfeder (4) pro Ebene oder ein gestapeltes Paket von zwei oder mehr, im wesentlichen gleichen Membranfedern (4) pro Ebene angeordnet sind, welche Membranfedern (4) an ihrem radial äußeren Rand (9) drehwechselfest mit dem Gehäuse (10) und an ihrem radial inneren Rand (22) ebenfalls drehwechselfest mit der Nabe (2) verbunden sind.

7. Axial- und Drehschwingungsdämpfer nach Anspruch 6, **dadurch gekennzeichnet, dass** sich eine der die Membranfedern (4) aufweisenden Ebenen in Axialrichtung vor dem Spaltraum (3) befindet, während sich andere Ebene nach dem Spaltraum (3) befindet.

8. Axial- und Drehschwingungsdämpfer nach Anspruch 7, **dadurch gekennzeichnet, dass** die Membranfedern (4) den zwischen den Ebenen liegenden Spaltraum (3) nach außen fluiddicht abdichten.

9. Axial- und Drehschwingungsdämpfer nach einem der Ansprüche 6 bis 8, **dadurch gekennzeichnet, dass** die Membranfedern (4) durch Befestigungsmittel (16, 17) an ihrem radial äußeren Rand (9) in Axialrichtung gegen eine radial innen an der Stirnfläche des Drehschwingungsdämpfers (1) ausgebildete Ringfläche (18), deren Ebene in der Radialebene liegt, und an ihrem radial inneren Rand (22) in Axialrichtung gegen eine an der Stirnfläche der Nabe (2) ausgebildete Ringfläche (19), deren Ebene in der radial Ebene liegt, gepresst werden.

10. Axial- und Drehschwingungsdämpfer nach Anspruch 9, **dadurch gekennzeichnet, dass** an dem radial inneren Rand (22) und dem radial äußeren Rand (9) der Membranfedern (4) zwischen zwei benachbarte Membranfedern (4) und auch zwischen den Membranfedern (4) und den gegenüberliegenden Ringflächen (18, 19) jeweils eine Abstands-Ringscheibe (20, 21) eingelegt ist.

11. Axial- und Drehschwingungsdämpfer nach einem der vorhergehenden Ansprüche, **dadurch gekennzeichnet, dass** in der Nabe (2) mindestens ein Vorratsraum (5) für das viskose Dämpfungsmedium ausgebildet ist, der mit dem Spaltraum (3) verbunden ist.

## Claims

1. Combined axial and torsional vibration damper comprising a housing (10) suitable for torsionally rigid fastening via a hub (2) to a machine shaft, in particular to a crankshaft of an engine, wherein said housing (10) is designed and connected to said hub (2) in a torsionally rigid and such a manner that oscillating axial vibrations between said housing (10) and said hub (2) are possible and a resilient return takes place and that a gap space (3) is provided between said housing (10) and said hub (2) that is filled with a viscous dampening medium subjected to shear loading when axial vibrations occur, with said gap space (3) being sealed to the outside in a fluid-tight manner and with the axial and torsional vibration damper being configured as mineral-oil torsional vibration damper or a viscosity torsional vibration damper in whose housing (10) an annular flywheel (12) is guided in such a manner that shear gaps (15) containing a viscous dampening medium are maintained between said housing (10) and said annular flywheel (12).

2. Axial and torsional vibration damper according to Claim 1, **characterised in that** said gap space (3) between said housing (10) and said hub (2) is connected to said shear gaps (15).

3. Axial and torsional vibration damper according to Claim 1 or 2, **characterised in that** said annular flywheel (12) encloses said hub (2) concentrically.

4. Axial and torsional vibration damper according to any of the preceding Claims, **characterised in that** said housing (10) comprises a radially inner cylinder surface (8) and said hub (2) comprises a radially outer cylinder surface (7) in such a form that the two cylinder surfaces (7, 8) are opposite to each other and define said gap space (3) therebetween.

5. Axial and torsional vibration damper according to any of the preceding Claims, **characterised in that** the resilient return is effected by a resilient spring acting between said housing (10) and said hub (2).

6. Axial and torsional vibration damper according to any of the preceding Claims, **characterised in that** at least one diaphragm spring (4) per level, which is disposed concentrically relative to the damper axis, or a stacked package of two or more substantially identical diaphragm springs (4) is/are disposed in two axially spaced and radially extending planes, which diaphragm springs (4) are connected to said hub (2) by their radial outer edge (9) to said housing (10) in a manner invariable in terms of rotation and by their radially inner edge (22), equally in a manner invariable in terms of rotation.

7. Axial and torsional vibration damper according to Claim 6, **characterised in that** one of the planes including said diaphragm springs (4) is located in front of said gap space (3), seen along the axial extension, whilst the other plane is disposed behind said gap space (3).

8. Axial and torsional vibration damper according to Claim 7, **characterised in that** said diaphragm springs (4) seal the gap space (3) located between said planes so as to be fluid-tight towards the outside.

9. Axial and torsional vibration damper according to any of the Claims 6 to 8, **characterised in that** said diaphragm springs (4) are pressed by fastening means (16, 17) by their radially outer edge (9) along the axial extension against an annular surface (18) formed radially inside on the face of said torsional vibration damper (1), with the plane of said annular surface being located in the radial plane, and by their radially inner edge (2) along the axial extension against an annular surface formed on the face of said hub (2), with the plane of said annular surface being located in the radial plane.

10. Axial and torsional vibration damper according to Claim 9, **characterised in that** one respective annular spacer disk (20, 21) is inserted on said radially inner edge (22) and said radially outer edge (9) of said diaphragm springs (4) between two adjacent diaphragm springs (4) and also between said diaphragm springs (4) and the opposite annular surfaces (18, 19).

11. Axial and torsional vibration damper according to any of the preceding Claims, **characterised in that** at least one reservoir space (5) is formed in said hub (2) for said viscous dampening medium, which reservoir space is connected to said gap space (3).

## Revendications

1. Amortisseur combiné de vibrations axiales et torsionnelles comprenant un carter (10) approprié à être fixé, de manière rigide à la torsion, via un moyeu (2) à l'arbre d'une machine, en particulier au vilebrequin d'un moteur, dans lequel ledit carter (10) est conçu et relié audit moyeu (2) d'une manière rigide à la torsion et d'une telle façon, que des vibrations axiales oscillantes entre ledit carter (10) et ledit moyeu (2) soient possible et qu'un retour élastique se fasse et qu'un espace en fente (3) est formé entre ledit carter (10) et ledit moyeu (2), qui est rempli d'un milieu amortissant visqueux assujetti aux charges de cisaillement, quand des vibrations axiales apparaissent, audit espace en fente (3) étant étanche vers l'extérieur d'une manière étanche aux fluides et à l'amortisseur de vibrations axiales et torsionnelles étant configuré sous forme d'un amortisseur de vibrations torsionnelles à huile minérale ou d'un amortisseur de vibrations torsionnelles à viscosité, à un carter (10), dans lequel un anneau volant (12) est guidé d'une telle manière, que des fentes à cisaillement (15), qui renferment un milieu amortissant visqueux, soient maintenu entre ledit carter (10) et ledit anneau volant (12).

2. Amortisseur de vibrations axiales et torsionnelles selon la revendication 1, **caractérisé en ce que** ledit espace en fente (3) entre ledit carter (10) et ledit moyeu (2) est relié auxdits fentes à cisaillement (15).

3. Amortisseur de vibrations axiales et torsionnelles selon la revendication 1 ou 2, **caractérisé en ce que** ledit anneau volant (12) renferme ledit moyeu (2) en configuration concentrique.

4. Amortisseur de vibrations axiales et torsionnelles selon une quelconque des revendications précédentes, **caractérisé en ce que** ledit carter (10) comprend une surface cylindrique radialement intérieure (8) et ledit moyeu (2) présente une surface cylindrique radialement extérieure (7) en une telle forme, que lesdites deux surfaces cylindriques (7, 8) se trouvent en opposition l'une à l'autre, en définissant ledit espace en fente (3) y entre.

5. Amortisseur de vibrations axiales et torsionnelles selon une quelconque des revendications précédentes, **caractérisé en ce que** le retour élastique se fait moyennant un ressort élastique agissant entre ledit carter (10) et ledit moyeu (2).

6. Amortisseur se vibrations axiales et torsionnelles selon une quelconque des revendications précédentes, **caractérisé en ce qu'**au moins un ressort à diaphragme (4) par niveau, qui est disposé en arrangement concentrique relatif à l'axe de l'amortisseur, ou un paquet empilé à deux ou plus ressorts à diaphragme (4) essentiellement identiques est/sont disposés en deux planes à un écart axial, qui s'étendent en sens radial, ces ressorts à diaphragme (4) étant reliés audit moyeu (2) par leur bord (9) radialement extérieur audit carter (10) d'une manière non variable en rotation et par leur bord (22) radialement intérieur également d'une manière non variable en rotation.

7. Amortisseur de vibrations axiales et torsionnelles selon la revendication 6, **caractérisé en ce qu'**un des plans, qui renferment lesdits ressorts à diaphragme (4), se trouve devant ledit espace en fente (3), vu le long de l'étendue axial, pendant que l'autre plan est disposé derrière ledit espace en fente (3).

8. Amortisseur de vibrations axiales et torsionnelles selon la revendication 7, **caractérisé en ce que** lesdits ressorts à diaphragme (4) rendent ledit espace en fente (3), qui se trouve entre lesdits plans, étanche aux liquides vers l'extérieur.

9. Amortisseur de vibrations axiales et torsionnelles selon une quelconque des revendications 6 à 8, **caractérisé en ce que** lesdits ressorts à diaphragme (4) sont pressés moyennant des moyens de fixation (16, 17) par leur bord (9) radialement extérieur le long du sens axial contre une surface annulaire (18) formée radialement à l'intérieur sur la face dudit amortisseur de vibrations torsionnelles (1), au plan de ladite surface annulaire se trouvant dans le plan radial, et par leur bord (22) radialement intérieur le long du sens axial contre une surface annulaire formée sur la face dudit moyeu 82), au plan de ladite surface annulaire se trouvant dans le plan radial.

10. Amortisseur de vibrations axiales et torsionnelles selon la revendication 9, **caractérisé en ce qu'**un disque écarteur annulaire respectif (20, 21) est inséré sur ledit bord radialement intérieur (22) et ledit bord (9) radialement extérieur desdits ressorts à diaphragme (4) entre deux ressorts à diaphragme (4) adjacents et aussi entre lesdits ressorts à diaphragme (4) et les surfaces annulaires opposée (18, 19).

11. Amortisseur de vibrations axiales et torsionnelles selon une quelconque des revendications précédentes, **caractérisé en ce qu'**un moins un espace réservoir (5) est formé dans ledit moyeu (2) pour ledit milieu amortissant visqueux, cet espace réservoir étant relié espace en fente (3).
